# EUROPEAN PATENT APPLICATION

(11) **EP 4 350 920 A1**
(43) Date of publication of application: **10.04.2024**
(21) Application number: 21944016.1
(22) Date of filing: 31.05.2021
(51) Int. Cl.: H02H 9/02

(54) **PROTECTION CIRCUIT**

(71) Applicant: Koito Electric Industries, Ltd., Nagaizumi-cho Sunto-gun, Shizuoka 411-0932 (JP)
(72) Inventor: SAITO, Akira, Sunto-gun, Shizuoka 411-0932 (JP); KUSANO, Junichi, Sunto-gun, Shizuoka 411-0932 (JP)
(74) Representative: Petraz, Gilberto Luigi
(86) International application number: PCT/JP2021/020649
(87) International publication number: WO 2022/254505

(57) **Abstract**

In order to provide protection of an electronic component with low costs and a simplified structure, a protection circuit includes: a varistor configured to be connected between a positive pole side and a negative pole side of a power supply and to be connected in parallel to a protected component; and a resistor configured to be connected between the varistor and the positive pole side of the power supply, and/or between the varistor and the negative pole side of the power supply.

## Description

### BACKGROUND OF THE INVENTION

### Technical Field

The present invention relates to a protection circuit.

### Background Art

A varistor is used to protect an electronic component from surge voltages. When a voltage exceeding a predetermined value (limit voltage of the varistor) is applied to the varistor, a current abruptly flows through the varistor, wherein the applied voltage is limited equal to or below the predetermined value. For this reason, a voltage applied to an electronic component to be protected can be also limited equal to or below a predetermined value by connecting the varistor in parallel to the electronic component, whereby the electronic component can be protected from surge voltages.

In such an arrangement, a power supply is conventionally protected from short-circuit failures of the varistor by means of a fuse (e.g. Patent Document 1). In order to avoid short-circuiting of positive and negative poles of the power supply in the case of a short-circuit failure of the varistor, the fuse is arranged between the varistor and power supply.

### Citation List

### Patent Literature

Patent Document 1: JP 2019-67691 A

### SUMMARY OF THE INVENTION

When using the fuse to protect the power supply from short-circuit failures of the varistor, the fuse is also broken in the case of such a short-circuit failure of the varistor, wherein in addition to exchange of the varistor, it is necessary to exchange the fuse.

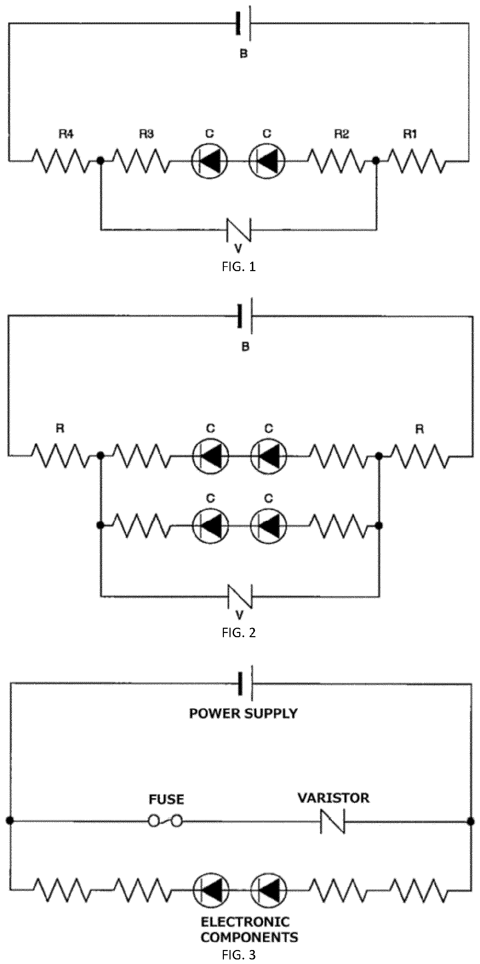

As shown in Fig. 3, the fuse may be also arranged in series with the varistor and in parallel to the electronic component to be protected. Such arrangement also enables the power supply to be protected from short-circuit failures of the varistor because the fuse is arranged between the varistor and the power supply.

However, when the fuse is arranged as shown in Fig. 3, a current still continues to flow through the electronic component from the power supply after a short-circuit failure of the varistor occurs and the fuse is broken. This means that after occurrence of the short-circuit failure of the varistor, the power supply continues to provide the current to the electronic component without any protection of the electronic component from surge voltages. Therefore, the electronic component may be broken down due to a surge voltage without being aware that the short-circuit failure of the varistor has occurred.

An objective of the present invention is to provide protection of an electronic component with low costs and a simplified structure.

In order to achieve the above objective, a protection circuit includes: a varistor configured to be connected between a positive pole side and a negative pole side of a power supply and to be connected in parallel to a protected component; and a resistor configured to be connected between the varistor and the positive pole side of the power supply, and/or between the varistor and the negative pole side of the power supply.

The protected component may be a light emitting diode, and the resistor may be part of a current limiting resistor for the light emitting diode.

The light emitting diode may be a safety component for a railway vehicle.

The invention enables protection of an electronic component to be achieved with low costs and a simplified structure.

### BRIEF DESCRIPTION OF THE DRAWINGS

Fig. 1 shows a protection circuit according to an embodiment of the present invention;
Fig. 2 shows an example for a protection circuit in the case of a plurality of protected components C connected in parallel; and
Fig. 3 shows a protection circuit from prior art.

### DETAILED DESCRIPTION OF PREFERRED EMBODIMENTS

Fig. 1 shows a protection circuit according to an embodiment of the present invention. The protection circuit includes a varistor V configured to be connected between a positive pole side and a negative pole side of a power supply B and to be connected in parallel to protected components C.

In this manner, the present embodiment enables a voltage applied to the protected components C to be limited equal to or below a limit voltage of the varistor V, whereby the electronic components can be protected from surge voltages.

Furthermore, in the protection circuit according to the present embodiment, a resistor R1 is arranged between the varistor V and the positive pole side of the power supply B, and a resistor R4 is arranged between the varistor V and the negative pole side of the power supply B.

Therefore, according to the present embodiment, the positive pole and negative pole of power supply B may not be short-circuited even when a short-circuit failure of the varistor V occurs. In other words, the present embodiment enables the power supply to be protected from short-circuit failures of varistor without using a fuse. Therefore, the present embodiment enables one or more light emitting diodes (LED) to be protected with low costs and a simplified structure.

As shown in Fig. 1, the protected components C are e.g. LEDs. In this case, the resistors R1-R4 are current limiting resistors, which limit a current provided to the LEDs. Namely, the resistors R1, R4 are part of the current limiting resistors R1-R4 for the LEDs, and according to the present embodiment, there is no electronic component only for the short-circuit failures of the varistor V

Further, according to the present embodiment, most of the current provided to the power supply B flows through a path including the varistor V, wherein only little current flows through paths including the LEDs. In this manner, when a short-circuit failure of the varistor occurs, light emission of the LEDs is substantially prohibited. Therefore, according to the present embodiment, one can know occurrence of the short-circuit failure of the varistor V by checking the light emission of LEDs.

In order to protect the circuit, a protection device such as a NFB (No Fuse Breaker) may be installed. In this case, the present embodiment also enables the protected components C to be protected without activating the protection device when a short-circuit failure of the varistor occurs.

Preferably, the protection circuit according to the present embodiment may be used for protection of one or more LEDs of one or more safety components for a railway vehicle, such as vehicle side lights. In a railway vehicle, a housing accommodating the safety component therein may be separated away from a housing accommodating a power supply therein. For example, a housing accommodating a vehicle side light may be arranged on a lateral side of the vehicle, while a housing accommodating a power supply for providing a current to the vehicle side light may be arranged in a lower portion of the vehicle. According to the present embodiment, it is possible to arrange the varistor in the housing accommodating the safety component, which facilitates installation and exchange of the varistor.

Also in the case where a plurality of protected components C are connected in parallel, the varistor V may be preferably connected between the positive pole side and the negative pole side of the power supply B and be connected in parallel to all of the protected components C for example, as shown in Fig. 2, wherein resistors R may be preferably arranged between the varistor V and the positive pole side of the power supply B and between the varistor V and the negative pole side of the power supply B.

Although Figs. 1 and 2 show the examples in which the resistors are arranged between the varistor V and the positive pole side of the power supply B as well as between the varistor V and the negative pole side of the power supply B, resistors may be also arranged either between the varistor V and the positive pole side of the power supply B or between the varistor V and the negative pole side of the power supply B.

The present invention has been described above by means of the preferable embodiment thereof. Although the invention has been described herein by presenting specific examples, various modifications and changes may be made to such an example without departing from the spirit and scope of the invention as set forth in the claims.

### Reference Signs List

- V: Varistor
- B: Powe supply
- C: Protected components
- R1-R4: Resistors

## Claims

1. A protection circuit, comprising:
a varistor configured to be connected between a positive pole side and a negative pole side of a power supply and to be connected in parallel to a protected component; and
a resistor configured to be connected between the varistor and the positive pole side of the power supply, and/or between the varistor and the negative pole side of the power supply.

2. The protection circuit according to claim 1, wherein
the protected component is a light emitting diode, and
the resistor is part of a current limiting resistor for the light emitting diode.

3. The protection circuit according to claim 2, wherein
the light emitting diode is a safety component for a railway vehicle.
